# EUROPÄISCHE PATENTANMELDUNG

(11) **EP 0 833 303 A2**
(43) Veröffentlichungstag der Anmeldung: **01.04.1998**
(21) Anmeldenummer: 97202821.1
(22) Anmeldetag: 15.09.1997
(51) Int. Cl.: G10L 3/00

(54) **Verfahren und Anordnung zum Durchführen von Datenbankanfragen**

(30) Priorität: 27.09.1996 DE 19639843
(71) Anmelder: Philips Patentverwaltung GmbH, 22335 Hamburg (DE); Philips Electronics N.V., 5621 BA Eindhoven (NL)
(72) Erfinder: Kellner, Andreas, Röntgenstrasse 24, 22335 Hamburg (DE); Rüber, Bernhard, Röntgenstrasse 24, 22335 Hamburg (DE); Seide, Frank, Röntgenstrasse 24, 22335 Hamburg (DE)
(74) Vertreter: Poddig, Dieter, Dipl.-Ing.

(57) **Zusammenfassung**

Bei der Durchführung von gesprochenen Datenbankanfragen werden die notwendigen Angaben häufig erst in einem Dialog zwischen dem System und dem Benutzer erhalten. Bei der Erkennung der gesprochenen Anfrage bzw. der folgenden Sprachäußerungen können beispielsweise durch Erkennungsfehler Angaben erhalten werden, die nicht zueinander passen. Dies kann zu einer Verlängerung des Dialogs führen, die für den Benutzer lästig ist, oder gar zum erfolglosen Abbruch der Datenbankanfrage. Um diese Fälle möglichst weit zu verringern, wird erfindungsgemäß vorgeschlagen, die aus jeder Äußerung des Benutzers abgeleiteten Angaben für die Datenbankanfrage zunächst auf Konsistenz sowohl der Angaben miteinander als auch mit im früheren Teil des Dialogs gewonnenen Angaben zu prüfen und beim Auftreten von Inkonsistenzen aus derselben Sprachäußerung des Benutzers weitere Sätze von Angaben abzuleiten, die eine abnehmend geringere akustische Ähnlichkeit mit dem Sprachsignal haben. Dadurch können Erkennungsfehler verringert werden, so daß in häufigeren Fällen eine erfolgreiche Datenbankanfrage durchgeführt werden kann.

## Beschreibung

Die Erfindung betrifft ein Verfahren zum Durchführen von Datenbankanfragen eines Benutzers aus Sprachäußerungen in natürlicher Sprache sowie eine derartige Anordnung.

Datenbankanfragen über Tastatureingaben, die strengen Bedienungsregeln folgen, sind allgemein bekannt und werden nur von geschulten Benutzern durchgeführt. Es gibt jedoch auch Datenbanken, die von einem breiten, ungeschulten Publikum benutzt werden sollen, beispielsweise automatische Fahrplanauskünfte für Züge, Auskünfte für Telefonnummern aus einem Teilnehmerverzeichnis oder automatische Vermittlungen gewünschter Teilnehmer. Solche Datenbankanfragen sollen für den Benutzer mit möglichst wenig technischen Mitteln durchführbar sein, und dafür sind am besten gesprochene Datenbankanfragen geeignet, die insbesondere auch mittels Telefon durchgeführt werden können. Ferner sollen für solche Datenbankanfragen möglichst wenige oder praktisch keine formalen Regeln bestehen, damit jeder ungeübte Benutzer solche Datenbankanfragen durchführen kann.

Ein Verfahren bzw. ein System zum Durchführen von Datenbankanfragen in Form natürlich gesprochener Äußerungen ist aus der EP 702 353 A2 (PHD 94-120) bekannt. Dabei wird das Sprachsignal in einer Erkennungsanordnung in Wörter umgesetzt, aus denen ein Wortgraph gebildet wird, und aus diesem werden Angaben für einen Datenbankzugriff abgeleitet. Sofern die Angaben für einen vollständigen Datenbankzugriff nicht ausreichen, wird ein Sprachsignal ausgegeben, das den Benutzer zur Abgabe weiterer Sprachäußerungen veranlassen soll, aus denen dann weitere, insbesondere fehlende und korrigierte Angaben, abgeleitet werden. Aus jeder Sprachäußerung wird jedoch praktisch nur ein Satz von Angaben abgeleitet, und wenn diese Ableitung nicht richtig erfolgt, beispielsweise durch eine ungünstige Aussprache des Benutzers, entsprechen die abgeleiteten Angaben nicht dem, was der Benutzer sagen wollte, so daß häufigere Aufforderungen an den Benutzer durch das System erfolgen, die für den Benutzer lästig sind.

Aufgabe der Erfindung ist es, ein Verfahren sowie eine Anordnung anzugeben, das mit größerer Zuverlässigkeit aus den vom Benutzer abgegebenen Sprachäußerungen die wirklich vom Benutzer gemeinten Angaben ableitet.

Diese Aufgabe wird gemäß dem der Erfindung zugrunde liegenden Prinzip dadurch gelöst, daß bei der Ableitung der Angaben aus der Sprachäußerung alles Wissen des Systems mit der Datenbank für Konsistenzprüfungen berücksichtigt wird. Dieses Wissen umfaßt zunächst die semantischen Regeln für einen Satz von Angaben, d.h. die Angaben dürfen nicht mehrdeutig sein, z.B. keine zwei Nachnamen bei einem Teilnehmerverzeichnis oder zwei Zielbahnhöfe bei einer Fahrplanauskunft. Weiter sollen die Angaben konsistent zu früher im Dialog gewonnenen Angaben sein, wobei jedoch Ausnahmen möglich sind, beispielsweise wenn der Benutzer eine solche Angabe bei deren Wiederholung in einer Aufforderung des Systems ausdrücklich verneint. Ferner wird zumindest bei dem zuerst aus der Sprachäußerung abgeleiteten Satz von Angaben, der am wahrscheinlichsten der Sprachäußerung akustisch unter Berücksichtigung eines Sprachmodelles entspricht, davon ausgegangen, daß die Sprachäußerung die der vorausgehenden Aufforderung des Systems entsprechenden Angaben enthält. Schließlich wird die Konsistenz mit dem Datenbankinhalt geprüft, d.h. eine Angabe wie ein bestimmter Name, die nicht in der Datenbank enthalten ist, wird als Inkonsistenz behandelt.

Diese Konsistenzprüfung wird zuerst mit einem Satz von Angaben durchgeführt, der am wahrscheinlichsten der Sprachäußerung entspricht, und wenigstens beim Feststellen einer Inkonsistenz werden automatisch weitere Sätze von Angaben mit nacheinander geringerer Wahrscheinlichkeit aus der Sprachäußerung abgeleitet. Es können jedoch auch, ohne daß eine Inkonsistenz auftritt, weitere Sätze von Angaben auf bestimmte Wahrscheinlichkeitskriterien untersucht werden, beispielsweise die Häufigkeit, mit der auf bestimmte Datenbankeinträge zugegriffen worden ist, und diese Häufigkeits-Wahrscheinlichkeit kombiniert mit der Erkennungswahrscheinlichkeit bestimmt, welcher Satz von Angaben ausgewählt wird. Diese Ableitung von weiteren Sätzen von Angaben aus der Sprachäußerung erfolgt so lange, bis keine Inkonsistenzen mehr festgestellt werden oder bis ggf. ein anderes Kriterium erreicht wird, beispielsweise eine vorgegebene Anzahl von Sätzen von Angaben oder die Unterschreitung eines vorgegebenen Maßes von Ähnlichkeit der Angaben mit der Sprachäußerung, die einem ungünstigen Bewertungswert bei den zu dem betreffenden Satz von Angaben gehörenden Wörtern aufgrund der Worterkennung entspricht. Wenn kein Satz von Angaben ohne Inkonsistenzen erreicht wird, kann beispielsweise die vorhergehende Aufforderung des Systems an den Benutzer wiederholt werden, eine Äußerung für bestimmte Angaben abzugeben.

Bei der Prüfung von Inkonsistenzen wird auch der Inhalt der vorhergehenden Aufforderung des Systems an den Benutzer einbezogen. Beispielsweise machen verneinende Angaben in einer Äußerung nur dann einen Sinn, wenn vorher eine entsprechende Aufforderung des Systems an den Benutzer abgegeben wurde. Andererseits werden Angaben, die im vorhergehenden Dialog aus Aufforderung des Systems und Sprachäußerungen des Benutzers als konsistent ermittelt worden waren, durch neue Angaben ersetzt, wenn letztere mit den übrigen Angaben aus dem weiteren Verlauf des Dialogs konsistent sind und die neue Angabe auch genügend Zuverlässigkeit bei der Erkennung gezeigt hat.

Ein Verfahren zum Ableiten von mehreren Wortfolgen aus einem Sprachsignal, das bei der vorliegenden Erfindung besonders vorteilhaft verwendet werden kann, ist in der prioritätsgleichen Patentanmeldung 196 39 844.4 (PHD 96-168) angegeben. Dafür ist es zweckmäßig, wenn nach einer Ausgestaltung der Erfindung aus jeder Sprachäußerung in der Erkennungsanordnung ein Wortgraph gebildet wird, aus dem ein Konzeptgraph mit relevanten Angaben abgeleitet wird, wobei nur diese relevanten Angaben auf Konsistenz geprüft werden. Dies erspart Rechenzeit und verringert die Möglichkeit zu Fehlreaktionen des Systems aufgrund falsch erkannter Füllwörter in der Sprachäußerung, die für den Datenbankzugriff nicht relevant sind.

Zur Prüfung von Inkonsistenzen eines Satzes von Angaben miteinander und mit den bereits im System enthaltenen Angaben aus dem vorhergehenden Verlauf des Dialogs kann zunächst ein vollständiger Satz von Angaben oder auch mehrere Sätze von Angaben mit abnehmender akustischer Übereinstimmung mit der Sprachäußerung abgeleitet werden, und die Angaben werden anschließend auf Konsistenz geprüft, bis ein Satz von Angaben ohne Inkonsistenzen festgestellt ist. Statt dessen ist es jedoch auch möglich, die vollständige Prüfung auf Konsistenz für jede relevante Angabe während der Ableitung dieser Angabe aus dem Sprachsignal durchzuführen und bei Feststellung einer Inkonsistenz die Ableitung des nächsten Satzes von Angaben zu beginnen. Damit kann zumindest in vielen Fällen der Verarbeitungsaufwand verringert werden.

Es ist auch möglich, beim Auftreten einer Inkonsistenz den betreffenden Satz von Angaben nicht vollständig zu verwerfen, sondern abhängig von der Art der Inkonsistenz diesem Satz von Angaben eine Bewertung zuzuteilen. Dann kann unter mehreren aufeinanderfolgenden Sätzen von Angaben mit Inkonsistenzen derjenige Satz von Angaben ausgewählt werden, der die günstigste bzw. die am wenigsten ungünstige Bewertung erhalten hat.

Beispiele für Inkonsistenzen sind beispielsweise bei einer Anfrage für ein TelefonVermittlungssystem die Erkennung von zwei Nachnamen oder bei einem Zugfahrplan-Auskunftssystem die Angabe von zwei Startbahnhöfen oder Zielbahnhöfen, die eine Inkonsistenz von Angaben untereinander darstellen. Eine weitere Inkonsistenz kann beispielsweise eine Angabe eines Namens oder eines Bahnhofs sein, die im Widerspruch zu vorhergehend gewonnenen Angaben steht, ohne daß vom System eine entsprechende Aufforderung an den Benutzer gestellt wurde, insbesondere wenn diese vorhergehende Angabe vom Benutzer bereits bestätigt worden ist. Eine Inkonsistenz mit dem Datenbankinhalt tritt beispielsweise dann auf, wenn eine als Teilnehmername bzw. als Bahnhofsname ermittelte Angabe nicht in der Datenbank enthalten ist. In einem solchen Falle kann beispielsweise von dem System eine Aufforderung an den Benutzer ausgegeben werden, diesen Namen zu wiederholen.

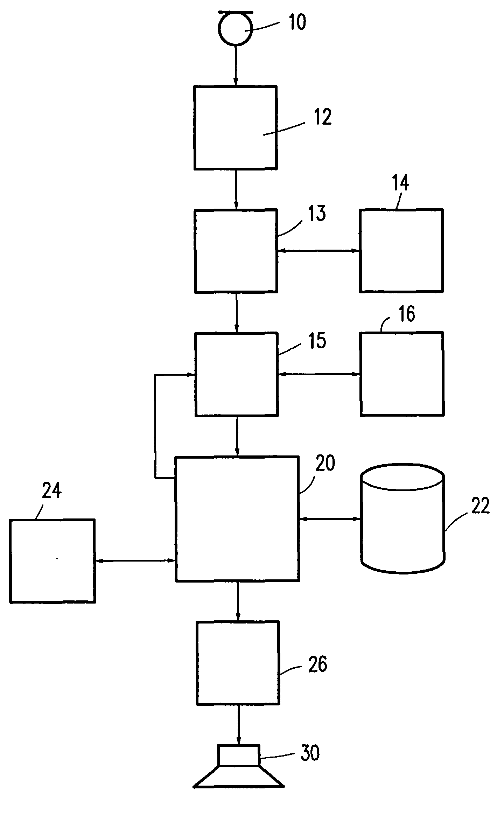

Ein Beispiel für eine mögliche Anordnung zur Durchführung des beschriebenen Verfahrens ist in der Figur dargestellt. Darin ist ein Mikrofon 10 dargestellt, das eine Sprachäußerung eines Benutzers aufnimmt und einer Anordnung 12 zuführt, in der diese Sprachäußerung wiederholt abgetastet wird und die abgetasteten Sprachsignale in digitale Werte umgesetzt werden, aus denen das Sprachsignal kennzeichnende charakteristische Werte abgeleitet werden, beispielsweise die Amplitude in verschiedenen Frequenzbändern. Diese charakteristischen Werte werden einer Anordnung 13 zugeführt, in der diese Werte mit Referenzwerten aus einem Speicher 14 verglichen und aus den Vergleichswerten Worthypothesen abgeleitet werden.

Diese Anordnung 13 gibt die beendeten Worthypothesen als Wortgraph ab und führt sie einer weiteren Anordnung 15 zu, in der aus dem Wortgraph mit Hilfe von in einem Speicher 16 gespeicherten Regeln ein sogenannter Konzeptgraph erzeugt wird, wie in der EP 0 701 353 A2 (PHD 94-120) beschrieben ist. In dem Konzeptgraphen sind mehrere unterschiedliche Pfade vom Anfang bis zum Ende des Konzeptgraphen möglich, die unterschiedliche Bewertungswerte aufweisen. Diese Bewertungswerte werden aus den Bewertungswerten des Wortgraphen und den Regeln gebildet und stellen ein Maß für die akustische Wahrscheinlichkeit dar, daß die Folge von Konzepten in dem betreffenden Pfad durch den Konzeptgraphen der tatsächlich gesprochenen Sprachäußerung des Benutzers entspricht.

Der Pfad mit der größten akustischen Wahrscheinlichkeit durch den Konzeptgraphen wird nun einer weiteren Anordnung 20 zugeführt, in der die Konzepte auf diesem Pfad auf Konsistenz geprüft werden. Dazu werden zunächst die Konzepte untereinander auf Konsistenz, d.h. auf Widerspruchsfreiheit geprüft. Ferner werden die Konzepte mit entsprechenden Konzepten verglichen, die bei vorgehenden Schritten des Dialogs zwischen dem Benutzer und dem System ermittelt wurden und die in einem Speicher 24 zwischengespeichert sind. Schließlich werden die Konzepte in der von der Anordnung 15 zugeführten Folge mit zumindest einigen Informationen der in einem Speicher 22 enthaltenen Datenbank verglichen. Dieser Speicher 22 ist üblicherweise als Plattenspeicher mit großer Speicherkapazität realisiert. Beispielsweise wird geprüft, ob bestimmte Inhalte eines Konzepts, beispielsweise ein bestimmter Bahnhofsname bei einem Fahrplanauskunftssystem oder ein bestimmter Teilnehmername bei einem Telefonvermittlungssystem in der Datenbank im Speicher 22 tatsächlich enthalten ist.

Sobald eine Inkonsistenz festgestellt wird, erzeugt die Anordnung 20 ein Signal an die Anordnung 15, worauf diese den Pfad mit nächstgeringerer akustischer Wahrscheinlichkeit durch den Konzeptgraphen abgibt, der in der Anordnung 20 in gleicher Weise auf Konsistenz geprüft wird. Dieser Vorgang wird wiederholt, bis keine Inkonsistenz mehr festgestellt wird oder bis eine vorgegebene Bedingung erreicht wird, beispielsweise eine vorgegebene Anzahl von Pfaden durch den Konzeptgraphen in der Anordnung 15 ausgegeben wurde oder bis eine vorgegebene akustische Wahrscheinlichkeit für einen von der Anordnung 15 auszugebenden Pfad durch den Konzeptgraphen unterschritten wird.

Wenn schließlich ein Pfad durch den Konzeptgraphen ohne Inkonsistenzen festgestellt wird, werden die Inhalte der Konzepte zu den im Speicher enthaltenen Angaben hinzugefügt, und wenn alle Angaben für alle Konzepte, die für eine Datenbankanfrage erforderlich sind, vorhanden sind, wird aus den Angaben eine Information gebildet und als Anfrageinformation an den Speicher 22 abgegeben. Die daraufhin vom Speicher 22 abgegebenen Daten werden über eine Ausgabeanordnung 26 und einen Lautsprecher 30 an den Benutzer als Antwort auf seine gesprochene Anfrage ausgegeben.

Wenn jedoch noch nicht alle notwendigen Angaben vorhanden sind, beispielsweise weil für ein Konzept noch keine ausreichend sichere Angabe ermittelt worden ist, oder wenn aus einer Sprachäußerung des Benutzers keine konsistenten Angaben abgeleitet werden konnten und eine vorgegebene Abbruchbedingung erreicht wurde, wird an den Benutzer eine Aufforderung ausgegeben, eine weitere Sprachäußerung abzugeben.

## Patentansprüche

1. Verfahren zum Durchführen von Datenbankanfragen eines Benutzers in Form von Sprachäußerungen in natürlicher Sprache, wobei jede Sprachäußerung in einer Erkennungsanordnung in wenigstens einen Satz von Angaben mit größter akustischer Wahrscheinlichkeit unter Berücksichtigung eines Sprachmodells umgesetzt wird, aus denen ein vollständiger Datenbankzugriff abgeleitet wird, indem die einzelnen Angaben auf Konsistenz miteinander, auf Konsistenz mit aus vorhergehenden Sprachäußerungen bei derselben Datenbankanfrage abgeleiteten Angaben und auf Konsistenz mit dem Datenbankinhalt geprüft werden und bei Feststellung von Inkonsistenzen weitere, aus der Sprachäußerung umgesetzte Sätze von Angaben mit abnehmender Wahrscheinlichkeit auf Konsistenz geprüft werden, bis keine Inkonsistenzen festgestellt werden und/oder bis ein weiteres Kriterium erfüllt ist, wobei ein auf diese Weise festgestellter Satz von Angaben ohne Inkonsistenzen als Datenbankzugriff verwendet wird.

2. Verfahren nach Anspruch 1, dadurch gekennzeichnet,
daß aus jeder Sprachäußetung in der Erkennungsanordnung ein Wortgraph gebildet wird, aus dem ein Konzeptgraph mit im wesentlichen nur für die Datenbankanfrage relevanten Angaben gebildet wird, aus dem eine wahrscheinlichste Folge von relevanten Angaben abgeleitet wird, wobei nur die relevanten Angaben auf Konsistenz geprüft werden.

3. Verfahren nach Anspruch 2, dadurch gekennzeichnet,
daß die vollständige Prüfung auf Konsistenz für jede relevante Angabe während der Bildung der Folge von Angaben durchgeführt wird und bei Feststellung einer Inkonsistenz die Bildung einer weiteren Folge von Angaben mit nächst geringerer Wahrscheinlichkeit begonnen wird.

4. Anordnung zum Durchführen von Datenbankanfragen eines Benutzers in Form von Sprachäußerungen in natürlicher Sprache, mit
einer Erkennungsanordnung (12 bis 16), um aus der Sprachäußerung wenigstens einen Satz von Angaben mit größter akustischer Wahrscheinlichkeit unter Berücksichtigung eines Sprachmodells abzuleiten und abzugeben,
eine Speicheranordnung (22), die Informationen für eine Datenbank enthält, die über Anfrageinformationen zugreifbar sind,
eine Steueranordnung (20), um jeden von der Erkennungsanordnung (12 bis 16) abgegebenen Satz von Angaben durch Vergleich insbesondere mit den Angaben untereinander, mit vorher erzeugten Angaben und mit Informationen von der Datenbank auf Konsistenz zu prüfen und bei Feststellung von Inkonsistenz die Erkennungsanordnung (12 bis 16) anzusteuern, wenigstens einen weiteren Satz von aus der Sprachäußerung abgeleiteten Angaben mit geringerer akustischer Wahrscheinlichkeit abzugeben, und bei Feststellung von Konsistenz den Satz von Angaben für eine Anfrageinformation an die Speicheranordnung (22) zu verwenden.
